# EUROPEAN PATENT APPLICATION

(11) **EP 1 372 080 A1**
(43) Date of publication of application: **17.12.2003**
(21) Application number: 02705236.4
(22) Date of filing: 15.03.2002
(51) Int. Cl.: G06F 13/14, G06F 13/38, G06F 12/14

(54) **INFORMATION PROCESSOR**

(30) Priority: 16.03.2001 JP 2001076226
(71) Applicant: Sony Corporation, Tokyo 141-0001 (JP)
(72) Inventor: YOSHIDA, Norifumi, SONY CORPORATION, Tokyo 141-0001 (JP)
(74) Representative: Mills, Julia
(86) International application number: JP0202474
(87) International publication number: WO02075558

(57) **Abstract**

The present invention relates to an information processing apparatus in which a personal computer including a device can acquire access to the device on a network formed by IEEE 1394. When a personal computer 1-1 or a personal computer 1-2 requests acquirement of access from a hard disk drive (HDD) 11, the HDD 11 compares the global unique identifier (GUID) of the personal computer 1 and the GUID of the personal computer 1-1 stored in the HDD 11. If the GUIDs match, access is granted to the personal computer 1. That is, access is granted to only the personal computer 1-1. The present invention can be applied to HDDs.

## Description

### Technical Field

The present invention relates to information processing apparatuses. In particular, the present invention relates to an information processing apparatus in which an access can be properly acquired on a network formed by an institute of electrical and electronic engineers (IEEE) 1394 high-speed serial bus.

### Background Art

Networks using the serial bus protocol (SBP) 2 are becoming widespread. SBP2 is a kind of communication protocol standard and is regarded as most suitable for connection based on the standard of the IEEE 1394 high-speed serial bus (hereinafter, referred to as IEEE 1394).

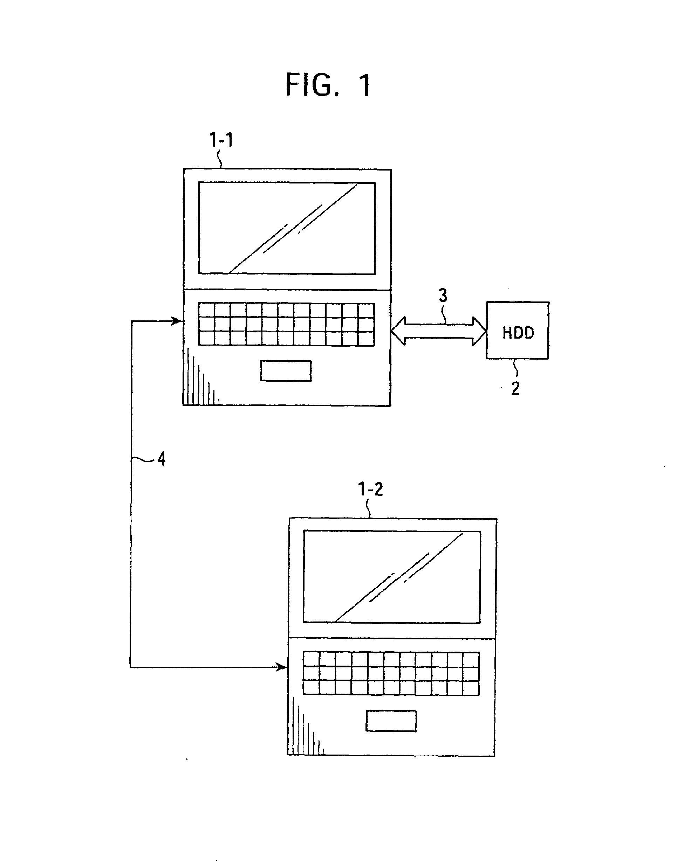

Fig. 1 shows an example of the configuration of a known network system using IEEE 1394.

A personal computer 1-1 includes a hard disk drive (HDD) 2 connected to an IEEE 1394 connector 3. In Fig. 1, the HDD 2 and the IEEE 1394 connector 3 are shown outside the personal computer 1-1 for clarity.

The personal computer 1-1 and a personal computer 1-2 are connected by an IEEE 1394 cable 4. (Hereinafter, the personal computers 1-1 and 1-2 are referred to as a personal computer 1 when it is not necessary to distinguish one computer from the other. The same applies to other parts.)

The personal computer 1-1 can transmit an operation command to the HDD 2 via the IEEE 1394 connector 3. Also, the personal computer 1-2 can transmit an operation command to the HDD 2 via the IEEE 1394 cable 4 and the IEEE 1394 connector 3. The HDD 2 operates in response to a command transmitted from the personal computer 1 (for example, stores predetermined data).

In the SBP2 standard, a device which can transmit an operation command, such as the personal computer 1-1 or the personal computer 1-2, is called the "initiator". A device which operates in response to a command transmitted from the initiator, such as the HDD 2, is called the "target".

A target can be accessed by only one initiator, and thus one target cannot be shared by a plurality of initiators. Accordingly, only the initiator which first requests access to the target can access the target. That is, the initiator which first requests access monopolizes access to the target. Hereinafter, the condition in which the initiator that first requests access to the target monopolizes access is called a "race condition".

According to the race condition, in the example shown in Fig. 1, when the personal computer 1-2 first requests access, the personal computer 1-2 monopolizes access to the HDD 2. That is, at this time, the personal computer 1-1 cannot access the HDD 2, even though the personal computer 1-1 includes the HDD 2.

It has been proposed that access be set in order of connection via IEEE 1394. However, in this case, the setting of access will change when the connection order is changed, and thus this method is not a fundamental solution for overcoming the above-described problems.

Also, it has been proposed that access be set for only the initiator which requests access by using a proper password generated by a password function provided in the SBP2 standard. However, if a plurality of initiators know the password, access to the target is monopolized by the initiator which accesses the target first. Therefore, this method is not a fundamental solution for overcoming the above-described problems.

### Disclosure of Invention

The present invention has been made in view of these circumstances so that a proper initiator can acquire access to a target on a SBP2 network.

An information processing apparatus of the present invention comprises storage means for storing authentication information of the control device for which control is allowed; obtaining means for obtaining the authentication information of the control device which requests control via the bus; comparing means for comparing the authentication information stored in the storage means and the authentication information obtained by the obtaining means; and allowing means for allowing the control device which requests control to perform control based on the comparison result obtained from the comparing means.

The storage means can store the authentication information of one of the control devices in advance.

When the storage means does not store authentication information, the storage means stores the authentication information of the control device that first requests control from among the plurality of control devices.

The information processing apparatus further comprises setting means for setting a mode. When a first mode is set by the setting means and when the storage means does not store authentication information, the storage means stores the authentication information of the control device that first requests control from among the plurality of control devices.

When a second mode is set by the setting means and when control is requested for the first time, the allowing means deletes the authentication information stored in the storage means and allows the control device which requests control to perform control.

An information processing method of the present invention comprises a storing step for storing authentication information of the control device for which control is allowed; an obtaining step for obtaining the authentication information of the control device which requests control via the bus; a comparing step for comparing the authentication information stored in the storing step and the authentication information obtained in the obtaining step; and an allowing step for allowing the control device which requests control to perform control based on the comparison result obtained in the comparing step.

A program in a recording medium of the present invention comprises a storing step for storing authentication information of the control device for which control is allowed; an obtaining step for obtaining the authentication information of the control device which requests control via the bus; a comparing step for comparing the authentication information stored in the storing step and the authentication information obtained in the obtaining step; and an allowing step for allowing the control device which requests control to perform control based on the comparison result obtained in the comparing step.

A program of the present invention allows a computer to execute processes comprising a storing step for storing authentication information of the control device for which control is allowed; an obtaining step for obtaining the authentication information of the control device which requests control via the bus; a comparing step for comparing the authentication information stored in the storing step and the authentication information obtained in the obtaining step; and an allowing step for allowing the control device which requests control to perform control based on the comparison result obtained in the comparing step.

The authentication information of the control device for which control is allowed is stored, the authentication information of the control device which requests control is obtained via the bus, the stored authentication information is compared to the obtained authentication information, and the control device which requests control is allowed to perform control.

### Brief Description of the Drawings

Fig. 1 shows an example of the configuration of a known network system.
Fig. 2 shows an example of the configuration according to a first embodiment of a network system using the present invention.
Fig. 3 shows an example of the appearance of the personal computer 1-1 shown in Fig. 2.
Fig. 4 is another view showing the appearance of the personal computer 1-1 shown in Fig. 2.
Fig. 5 is another view showing the appearance of the personal computer 1-1 shown in Fig. 2.
Fig. 6 is another view showing the appearance of the personal computer 1-1 shown in Fig. 2.
Fig. 7 is a block diagram showing an example of the inner configuration of the personal computer 1-1 shown in Fig. 2.
Fig. 8 is a block diagram showing an example of the configuration of an HDD 11 shown in Fig. 2.
Fig. 9 shows an example of the configuration of a network in which the personal computer 1 and the HDD 11 are connected in series.
Fig. 10 is a flowchart illustrating processes performed to acquire access.
Fig. 11 shows the format of LoginORB.
Fig. 12 shows the format of login_response.
Fig. 13 shows the format of Status_block.
Fig. 14 shows an example of the configuration according to a second embodiment of the network system using the present invention.
Fig. 15 is a block diagram showing an example of the configuration of the HDD 301 shown in Fig. 14.
Fig. 16 is a flowchart illustrating other processes performed to acquire access.

### Best Mode for Carrying Out the Invention

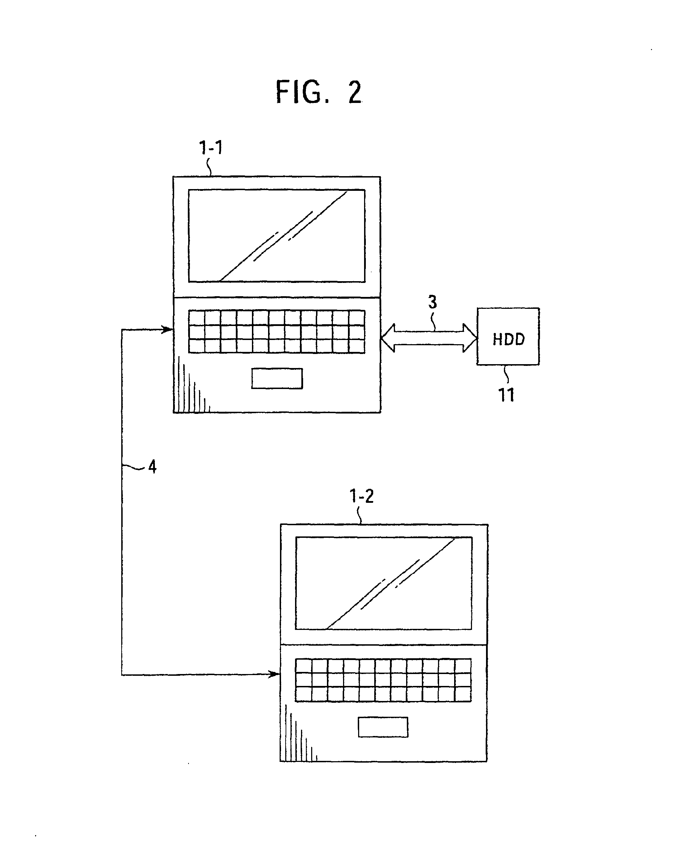

Fig. 2 shows an example of the configuration according to a first embodiment of a network system using the present invention. The network system includes an HDD 11 instead of the HDD 2 shown in Fig. 1. The other parts are the same as in Fig. 1 and a corresponding description will be omitted.

When the HDD 11 receives a request for access from a personal computer 1, the HDD 11 compares the global unique identifier (GUID) of the personal computer 1, which has requested access, with the GUID stored in the HDD 11, and gives the personal computer 1 access if both of the GUIDs match. That is, access is not granted when the two GUIDs do not match.

In this case, the HDD 11 stores the GUID of the personal computer 1-1. Thus, even when the personal computer 1-2 requests access from the HDD 11 earlier than the personal computer 1-1, access to the HDD 11 is not given to the personal computer 1-2.

The GUID is universal authentication information for identifying types, manufacturers, model numbers, serial numbers, and so on of all devices connected to the IEEE 1394. That is, predetermined GUIDs are allocated to the personal computers 1-1 and 1-2 and the HDD 11.

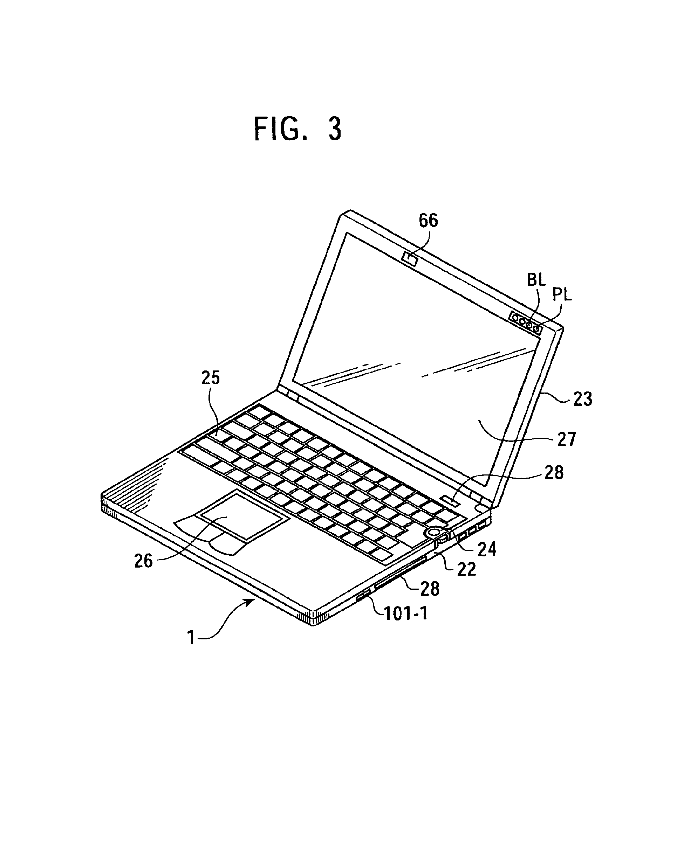

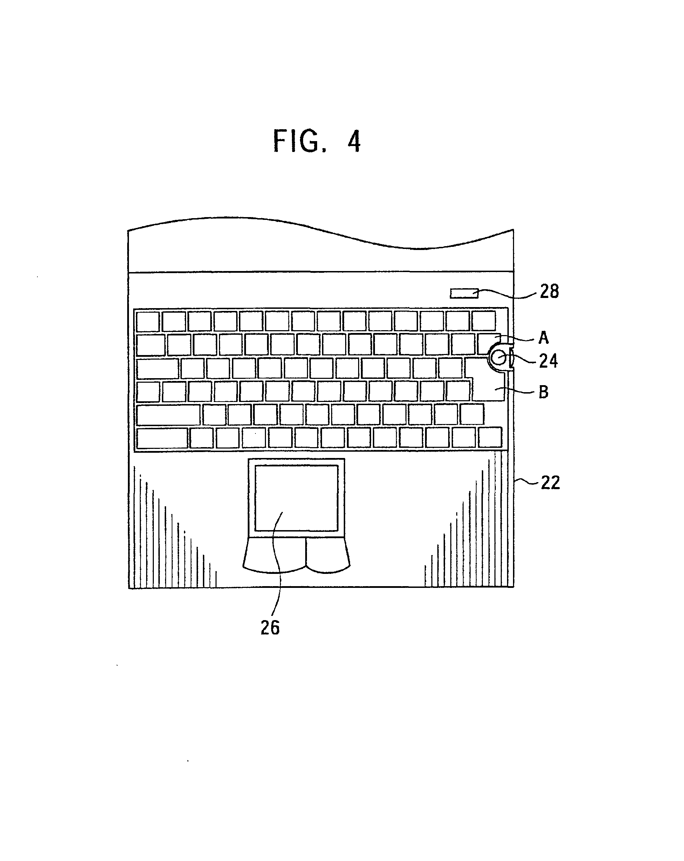

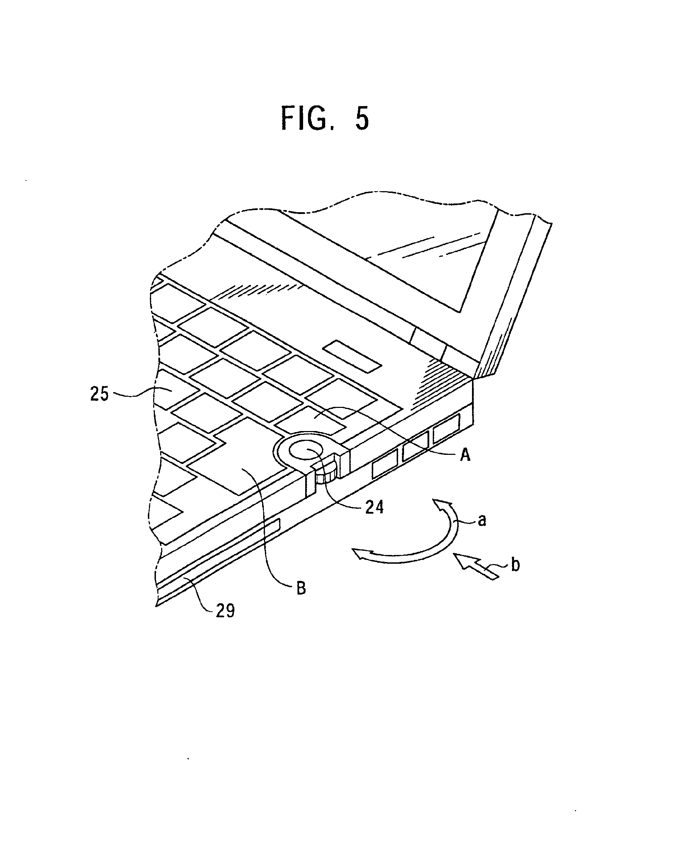

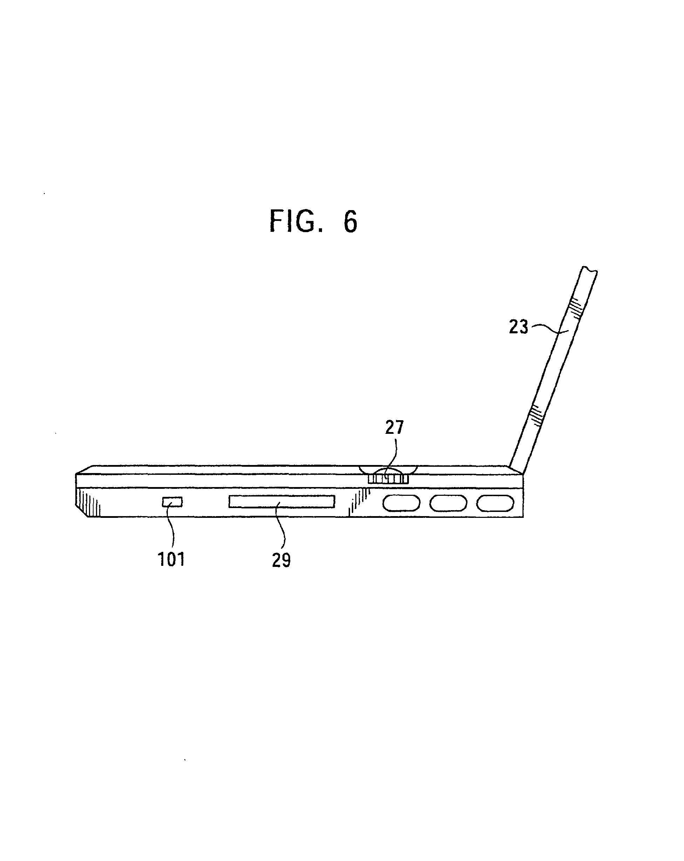

Next, the configuration of the personal computer 1-1 will be described with reference to Figs. 3 to 6. The personal computer 1-1 basically includes a main body 22 and a display unit 23, which can be opened and closed with respect to the main body 22. Fig. 3 is a perspective view showing a state where the display unit 23 is opened with respect to the main body 22. Fig. 4 is a plan view of the main body 22, and Fig. 5 is an enlarged view showing the vicinity of a jog dial 24, which will be described later, provided in the main body 22. Also, Fig. 6 is a side view showing the side of the jog dial 24 of the main body 22.

On the upper side of the main body 22, a keyboard 25 which can be operated for inputting various characters and symbols, a touch pad 26 functioning as a pointing device which can be operated for moving a pointer (mouse cursor), and a power switch 28 are provided. Alternatively, a stick-type pointing device can be provided instead of the touch pad 26.

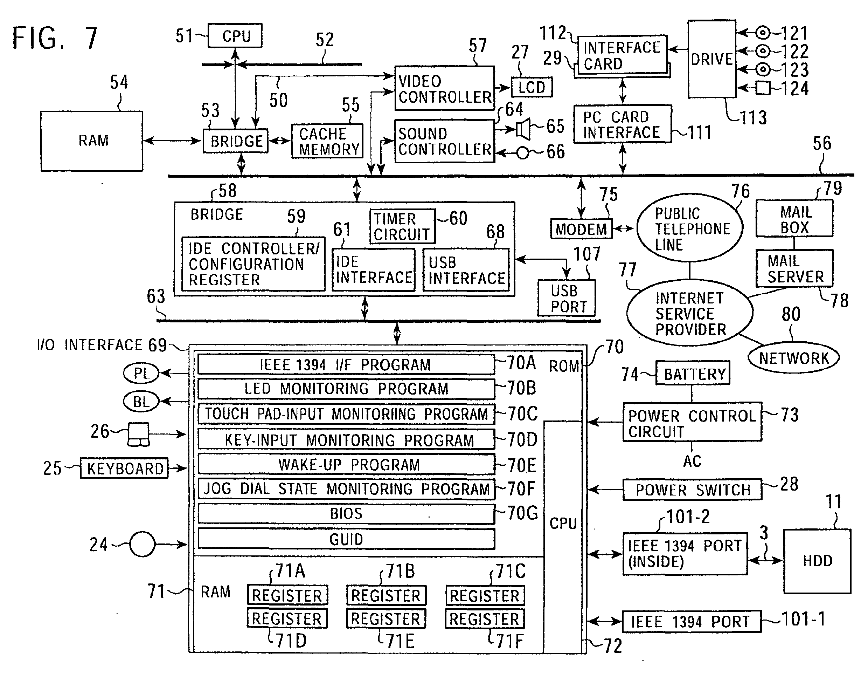

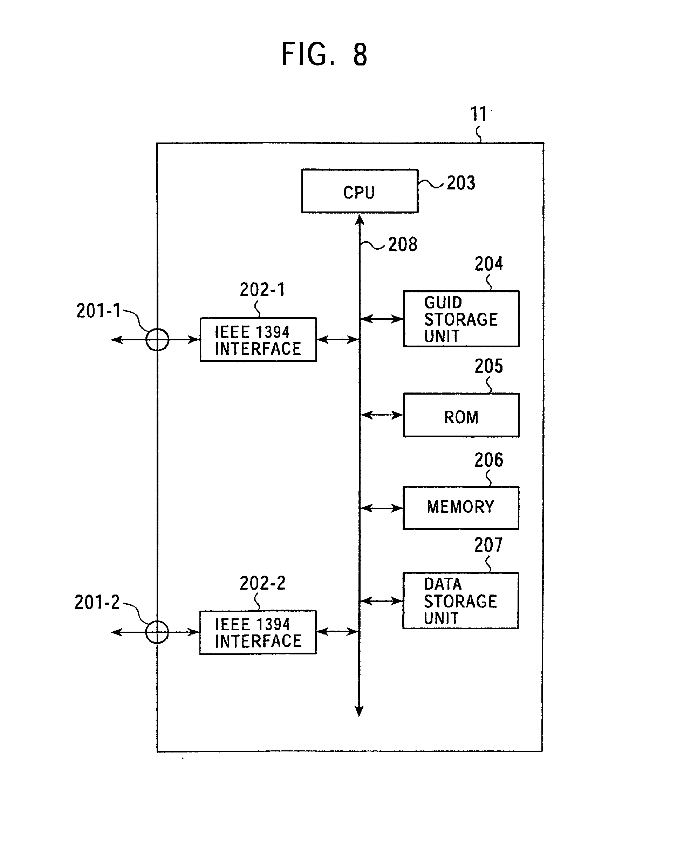

Also, the jog dial 24 and an IEEE 1394 port 101-1 are provided on a side surface. An IEEE 1394 port 101-2 (Fig. 7) is provided inside the personal computer 1-1 for connecting an internal device. The IEEE 1394 port 101-2 and an IEEE 1394 terminal 201-1 (Fig. 8) of the HDD 11 are connected and an IEEE 1394 connector 3 is provided inside the personal computer 1-1.

Further, a liquid crystal display (LCD) 27 for displaying images is provided on the front surface of the display unit 23. A power lamp PL, a battery lamp BL, and as required, a message lamp and other lamps including LEDs are provided on the upper right side of the display unit 23. Further, a microphone 66 is provided on the upper side of the display unit 23. The power lamp PL, the battery lamp BL, and so on can be provided on the lower side of the display unit 23.

The jog dial 24 is placed between keys of the keyboard 25 on the main body 22 such that the jog dial 24 is substantially flush with the keys. The jog dial 24 performs predetermined processing according to a rotational operation indicated by an arrow a and a push operation indicated by an arrow b shown in Fig. 5.

The jog dial 24 may be placed on the left side of the main body 22. Further, the jog dial 24 may be placed on the left side or right side of the display unit 23 provided with the LCD 27 or may be placed longitudinally between the G-key and the H-key on the keyboard 25. Alternatively, the jog dial 24 may be placed at the center of the front surface of the main body 22 so that the jog dial can be operated by a thumb while operating the touch pad 26 by a forefinger. Also, the jog dial 24 may be placed transversely along the upper end or the lower end of the touch pad 26 or may be placed longitudinally between a right button and a left button of the touch pad 26. Further, the positioning of the jog dial 24 is not limited to the vertical direction or the horizontal direction, and the jog dial 24 may be placed along a slanting direction at a predetermined angle so as to be easily operated with each finger. In addition, the jog dial 24 may be placed at a position on a side surface of a mouse functioning as a pointing device so as to be operated with a thumb.

Fig. 7 shows the electrical configuration of the personal computer 1-1.

A central processing unit (CPU) 51 includes, for example, a Pentium® processor made by Intel Corporation, and is connected to a host bus 52. A bridge 53 is connected to the host bus 52, and the bridge 53 is also connected to an accelerated graphics port (AGP) 50 and a PCI bus 56. The bridge 53 includes, for example, a 400BX made by Intel Corporation, and controls the vicinity of the CPU 51 and a RAM 54. Further, the bridge 53 is connected to a video controller 57 via the AGP 50. The bridge 53 and a bridge 58 form a so-called chip set.

The bridge 53 is also connected to the RAM 54 and a cache memory 55. The cache memory 55 caches data used by the CPU 51. Although not shown in the figure, a primary cache memory is provided inside the CPU 51.

The RAM 54 includes, for example, a dynamic random access memory (DRAM), and stores a program executed by the CPU 51 and data which is required for the operation of the CPU 51.

The video controller 57 is connected to a PCI bus 56 and the bridge 53 via the AGP 50, and controls the display on the LCD 27 based on data supplied via the PCI bus 56 or the AGP 50.

A sound controller 64 is connected to the PCI bus 56. The sound controller 64 receives input sound from the microphone 66 and supplies a sound signal to a speaker 65. Also, a modem 75 and a PC card slot interface 111 are connected to the PCI bus 56.

The modem 75 can be connected to a communication network 80 such as the Internet, a mail server 78, and so on via a public telephone line 76 and an Internet service provider 77. Also, when an optional function is added, transmission/reception of data is performed with an external device by loading an interface card 112 in a slot 29 connected to the PC card slot interface 111. For example, a drive 113 can be connected to the interface card 112 so that transmission/reception of data is performed with a magnetic disk 121, an optical disk 122, a magnetooptical disk 123, and a semiconductor memory 124 which are inserted into the drive 113.

Further, the bridge 58 is connected to the PCI bus 56. The bridge 58 includes, for example, a PIIX4E made by Intel Corporation, and controls various input/output. That is, the bridge 58 includes an integrated drive electronics (IDE) controller/configuration register 59, a timer circuit 60, an IDE interface 61, and a universal serial bus (USB) interface 68, and controls devices connected to a USB port 107 and devices connected via an industry standard architecture/extended input output (ISA/EIO) bus 63 and an I/O interface 69.

The IDE controller/configuration register 59 includes two IDE controllers: a so-called primary IDE controller and a secondary IDE controller, as well as a configuration register.

The primary IDE controller and the secondary IDE controller can be connected to an external device via an IDE bus (not shown).

The I/O interface 69 is connected to the ISA/EIO bus 63. The I/O interface 69, a ROM 70, a RAM 71, and a CPU 72 are connected together.

An IEEE 1394 interface (I/F) program 70A, an LED control program 70B, a touch pad-input monitoring program 70C, a key-input monitoring program 70D, a wake-up program 70E, and a jog-dial state monitoring program 70F are stored in the ROM 70 in advance.

The IEEE 1394 I/F program 70A is a program for performing input/output of IEEE 1394-compliant data transmitted/received via the IEEE 1394 port 101. For example, the IEEE 1394 I/F program 70A performs processing for acquiring access to the HDD 11 connected to the IEEE 1394 port 101-2. The process for acquiring access will be described later.

The LED control program 70B is a program for controlling the illumination of lamps including the power lamp PL, the battery lamp BL, and a message lamp and other lamps including LEDs provided as required.

The touch pad-input monitoring program 70C is a program for monitoring input performed by a user by using the touch pad 26. The key-input monitoring program 70D is a program for monitoring input performed by a user by using the keyboard 25 and other key switches.

The wake-up program 70E checks whether a predetermined time has arrived based on current-time data supplied from the timer circuit 60 in the bridge 58, and when that predetermined time has arrived, the wake-up program 70E manages the power of each chip in order to start a predetermined process (or a program).

The jog-dial state monitoring program 70F is a program for constantly monitoring the rotation and pushing of the rotary encoder portion of the jog dial 24.

A basic input/output system (BIOS) 70G is written in the ROM 70. The BIOS refers to a basic input/output system and is a software program for controlling input/output of data between an operating system (OS) or an application program and peripheral devices (for example, the display, the keyboard, and the HDD).

Further, the GUID of the personal computer 1-1 is stored in the ROM 70, and is read as required. Incidentally, a configuration ROM or a dedicated memory may be provided so as to store the GUID.

The RAM 71 includes registers 71A to 71F: registers for LED control, touch pad-input status, key-input status, and the set time; an I/O register for jog-dial status monitoring; and an IEEE 1394 I/F register. For example, when the jog dial 24 is pressed, the LED control register controls the illumination of a message lamp for indicating an e-mail instant startup state. The key-input status register stores an operation key flag when the jog dial 24 is pressed. The set time register can set a certain time arbitrarily.

In addition, the jog dial 24, the keyboard 25, and the touch pad 26 are connected to the I/O interface 69 via a connector (not shown). When a user operates the jog dial 24, the touch pad 26, or the keyboard 25, a signal corresponding to the operation of the jog dial 24, the keyboard 25, or the touch pad 26 is output to the ISA/EIO bus 63.

The I/O interface 69 transmits/receives data to/from the outside via the IEEE 1394 ports 101-1 and 101-2,

The power lamp PL, the battery lamp BL, the message lamp, a power control circuit 73, and other lamps including LEDs are connected to the I/O interface 69. The power control circuit 73 is connected to a built-in battery 74 or an AC power supply, supplies the required power to each block, and controls charging of the built-in battery 74 and secondary batteries in the peripheral devices.

The CPU 72 monitors the power switch 28, which is operated to turn the power on/off, via the I/O interface 69.

The CPU 72 can always execute the IEEE 1394 I/F program 70A to the BIOS 70G with an inner power supply even when the power switch 28 is off. That is, the IEEE 1394 I/F program 70A to the BIOS 70G operate constantly even when one of windows is not open on the LCD 27 of the display unit 23, Accordingly, the CPU 72 constantly executes the jog-dial state monitoring program 70F even when the power switch 28 is off and when the OS is not activated by the CPU 51. Also, the CPU 72 has a programmable power key (PPK) function even if a dedicated key is not provided in the personal computer 1-1. Thus, the user can startup any software or script file simply by pressing the jog dial 24 even in a power-saving state or a power-off state.

The configuration of the personal computer 1-2 is basically the same as that of the personal computer 1-1 and a detailed description will thus be omitted. However, the GUID of the personal computer 1-2 is stored in the personal computer 1-2.

Next, the configuration of the HDD 11 will be described with reference to Fig. 8.

An IEEE 1394 interface 202-1 is connected to the personal computer 1-1 via the IEEE 1394 terminal 201-1 and the IEEE 1394 connector 3 and functions as an interface thereof.

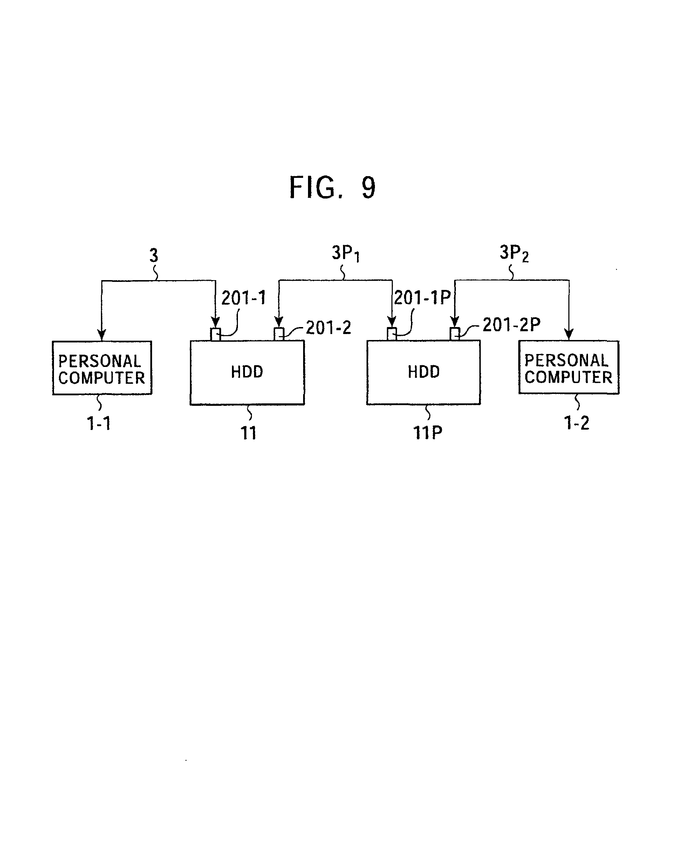

The HDD 11 further includes an IEEE 1394 terminal 201-2. As shown in Fig. 9, when a network including an HDD 11P is established, the IEEE 1394 terminal 201-2 is connected to an IEEE 1394 terminal 201-1P of the HDD 11P via an IEEE 1394 connector 3P₁. An IEEE 1394 terminal 201-2P of the HDD 11P is connected to the personal computer 1-2 via an IEEE 1394 connector 3P₂. The number of IEEE 1394 terminals 201 of the HDD 11 can be freely set in accordance with the number of devices to be connected.

Referring back to Fig. 8, a GUID storage unit 204 stores the GUID of the personal computer 1-1. A CPU 203 executes a predetermined program stored in a ROM 205 by using the GUID stored in the GUID storage unit 204. A memory 206 stores data required when the CPU 203 executes processing. A data storage unit 207 stores various data processed by the personal computer 1-1 and reads the stored data as required.

The GUID storage unit 204 and the data storage unit 207 are connected to the CPU 203 via a bus 208.

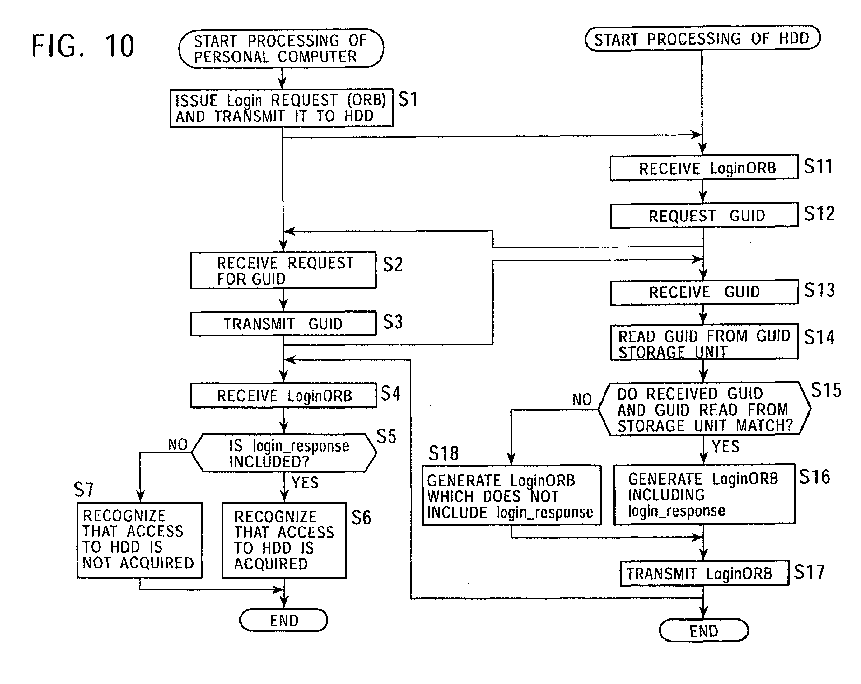

Next, the operation of the network system shown in Fig. 2 will be described with reference to a flowchart in Fig. 10. First, a case where the personal computer 1-1 requests access from the HDD 11 will be described.

In step S1, the CPU 72 of the personal computer 1-1 starts the IEEE 1394 I/F program 70A, issues a command (a command for requesting access) called login request (LoginORB: login operation request block), and outputs the command to the HDD 11 via the IEEE 1394 connector 3.

The LoginORB is a kind of operation request block (ORB), which is a command defined by SBP2. The ORB is issued by an initiator and is output to a target. The target performs a predetermined process based on the ORB, and after that, the target writes predetermined information regarding the process on the received ORB and returns the ORB to the initiator.

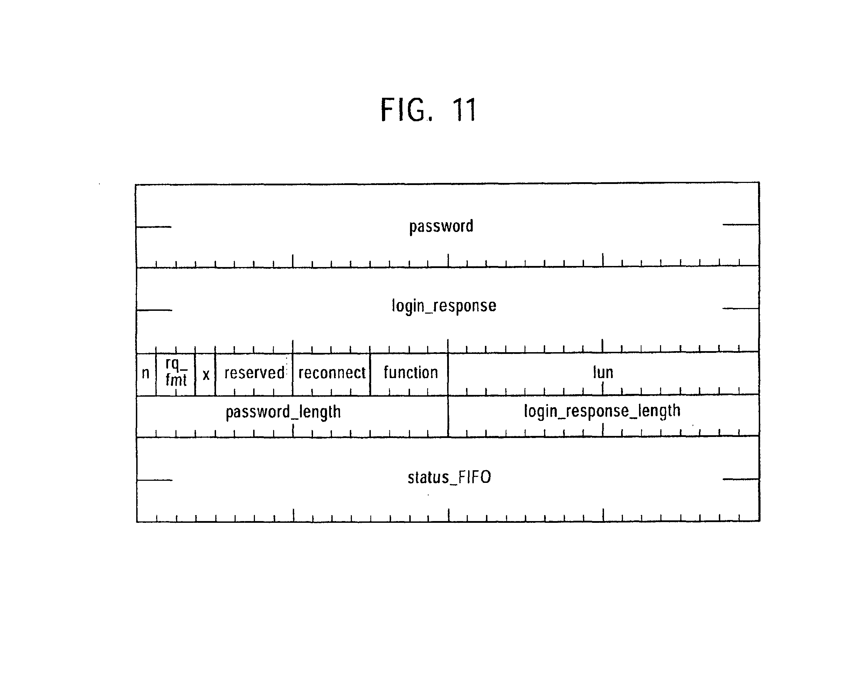

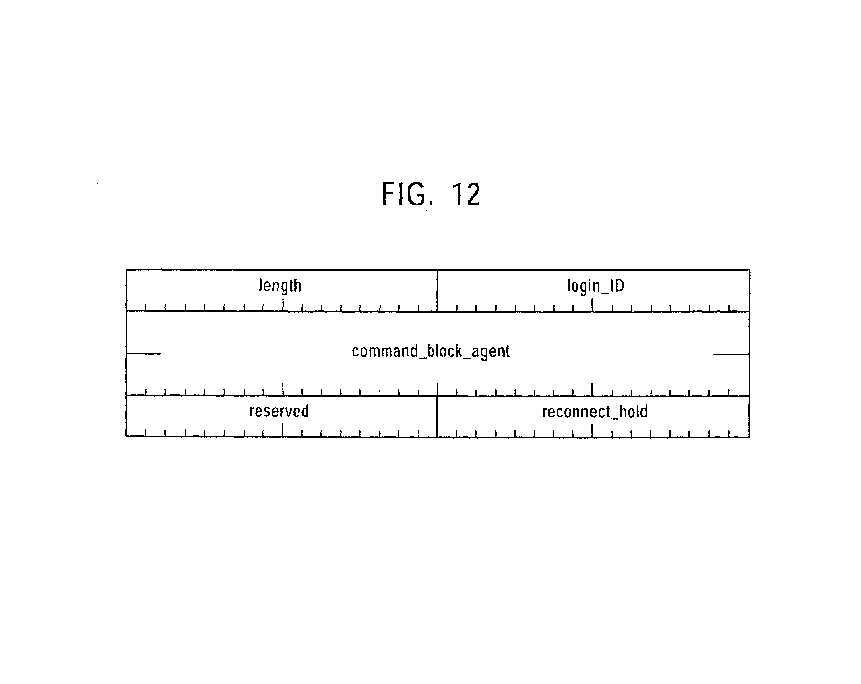

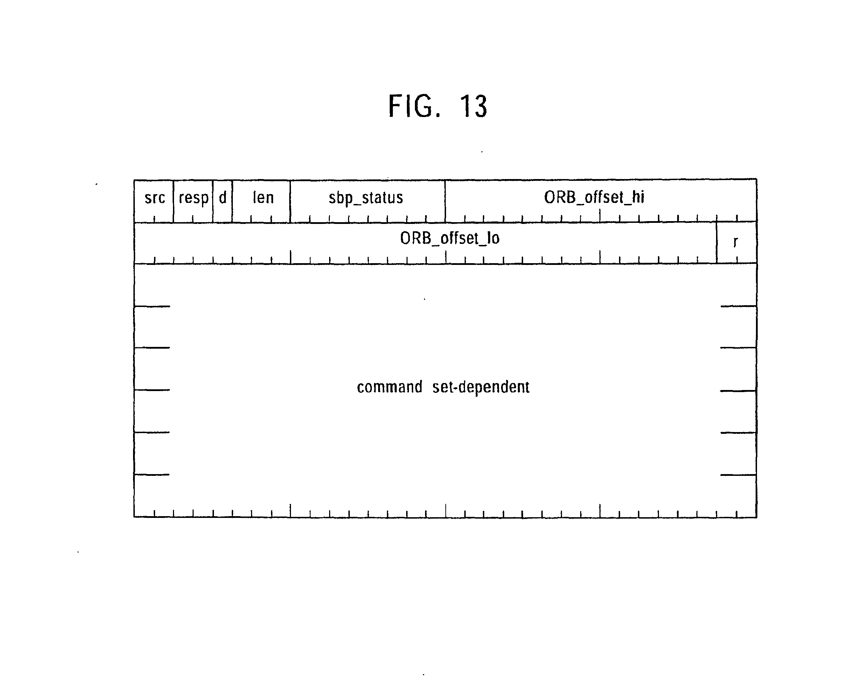

Fig. 11 shows the format of the LoginORB. In the figure, each column indicates a bit of data, and each row has 32 bits. Also, in the figure, the leftmost bit in the top row is the most significant bit and the rightmost bit in the bottom row is the least significant bit (this is the same in Figs. 12 and 13). When a row is not divided by a partition, the data region is variable.

"password" stores password data registered in a device which wants to acquire access. "password_length" stores the length of data stored in the "password". The password is optional. In this example, the password is not used, and thus they are omitted.

When access is granted, data indicating that fact is stored in "login_response" of the LoginORB, and data indicating the length of data stored in the "login_response" is stored in "login_response_length". In this case, data is written in the "login_response" and the "login_response_length" by the HDD 11. The "login_response" will be described in detail later with reference to Fig. 12.

In "n" (notify), "rq_fmt" (request format), and "function" in the row under the "login_response", data for specifying the type of ORB is stored. In this case, data indicating the LoginORB is stored therein.

In "x" (exclusive), data indicating whether the requested LoginORB is for a plurality of initiators or for only the initiator requesting access is stored, "reserved" is provided for adding more commands in the future. "reconnect" stores data of the time required for reconnection.

Data for specifying the destination device of LoginORB is stored in "lun" (logical unit number). In this case, data for specifying the HDD 11 is stored.

When the command has been executed by the HDD 11, a status block (Fig. 13), which will be described later, is written in "status FIFO".

Referring back to Fig. 10, in step S11, the CPU 203 of the HDD 11 receives a Login request (LoginORB) transmitted from the personal computer 1-1 via the IEEE 1394 connector 3 and the IEEE 1394 interface 202-1, and allows the memory 206 to store the LoginORB.

In step S12, the CPU 203 requests GUID from the personal computer 1-1 via the IEEE 1394 interface 202-1 and the IEEE 1394 connector 3.

In step S2, the CPU 72 of the personal computer 1-1 receives the request for the GUID from the HDD 11. Then, in step S3, the CPU 72 reads the GUID of the personal computer 1-1 stored in the ROM 70 and transmits the GUID to the HDD 11 via the IEEE 1394 connector 3.

In step S13, the CPU 203 of the HDD 11 receives the GUID of the personal computer 1-1 transmitted from the personal computer 1-1 via the IEEE 1394 interface 202-1. Then, in step S14, the CPU 203 reads the GUID stored in the GUID storage unit 204.

Next, in step S15, the CPU 203 determines whether or not the GUID received in step S13 and the GUID read in step S14 match. When the GUIDs match, the process proceeds to step S16. In this example, the GUID storage unit 204 stores the GUID of the personal computer 1-1. Thus, it is determined that the GUIDs match in step S15, and the process proceeds to step S16.

In step S16, the CPU 203 reads the LoginORB, which has been stored in the memory 206 in step S11, writes "login_response" and "status_FIFO" including data indicating granting of access in the LoginORB, so as to generate a LoginORB to be returned to the personal computer 1-1.

Now, the details of the "login_response" shown in Fig. 11 will be described with reference to Fig. 12.

Data indicating the data length of "login_response" is stored in "length" at the top of "login_response". Data for identifying an initiator to which access is granted is stored in "login_ID". In "command_block_agent", data of the address of a register (control and state register (CSR)) for performing various operations is stored. "reserved" is provided for adding more commands in the future, as in the above-described LoginORB.

"reconnect hold" stores data of the time required for the target to ensure resources for the operation performed by the initiator to which access is granted.

Next, status_block written in "status_FIFO" shown in Fig. 11 will be described with reference to Fig. 13.

Data for identifying the type of ORB is stored in "src". That is, in this case, data for indicating LoginORB is stored therein. Data for identifying the type of response is stored in "resp". Data indicating whether or not the current target can receive a command is stored in "d".

In "len", data indicating the number of pieces of information of an effective status_block stored in the status_FIFO is stored. Additional data corresponding to information stored in "resp" is stored in "sbp_status". "ORB_offset_hi", "ORB_offset_lo", and "r" are used for specifying various address spaces. In "command set-dependent", various data for each command is stored.

Referring back to Fig. 10, in step S17, the CPU 203 of the HDD 11 outputs the LoginORB generated in step S16 to the personal computer 1-1 via the IEEE 1394 interface 202-1 and the IEEE 1394 connector 3.

Accordingly, in step S4, the CPU 72 of the personal computer 1-1 receives the LoginORB input by the HDD 11 via the IEEE 1394 connector 3.

Next, in step S5, the CPU 72 determines whether or not the received LoginORB includes login_response. If it is determined that login_response is included, the process proceeds to step S6, where the CPU 72 recognizes that access to the HDD 11 has been acquired. In this case, the Login ORB includes login_response, and thus the process proceeds to step S6, where it is recognized that access to the HDD 11 has been acquired.

In this way, the personal computer 1-1, which includes the HDD 11, can acquire access to the HDD 11.

Next, processes performed when the personal computer 1-2 requests access from the HDD 11 will be described with reference to the flowchart in Fig. 10.

Herein, the processes in steps S1 to S4 and steps S11 to S14 are the same as in the case where the personal computer 1-1 requests access to the HDD 11, and thus the corresponding description will be omitted.

In step S15, the CPU 203 of the HDD 11 determines that the GUID received in step S13 (the GUID of the personal computer 1-2) and the GUID read from the GUID storage unit 204 (GUID of the personal computer 1-1) do not match, and the process proceeds to step S18.

In step S18, the CPU 203 reads the LoginORB stored in the memory 206 in step S11 and generates a LoginORB which does not include login_response, that is, a LoginORB in which only a status block is written in "Status_FIFO" of the LoginORB. Then, in step S17, the LoginORB is output to the personal computer 1-2 via the IEEE 1394 interface 202-1 and the IEEE 1394 connector 3.

Accordingly, in step S4, the personal computer 1-2 receives the LoginORB input from the HDD 11 via the IEEE 1394 connector 3 and the IEEE 1394 cable 4.

Next, in step S5, the personal computer 1-2 determines that the received LoginORB does not include login_response. Then, in step S7, the personal computer 1-2 recognizes that it has failed to acquire access to the HDD 11.

As described above, the personal computer 1-2 cannot acquire access to the HDD 11. That is, even if the personal computer 1-2 requests access from the HDD 11 earlier than the personal computer 1-1, access to the HDD 11 is not granted to the personal computer 1-2.

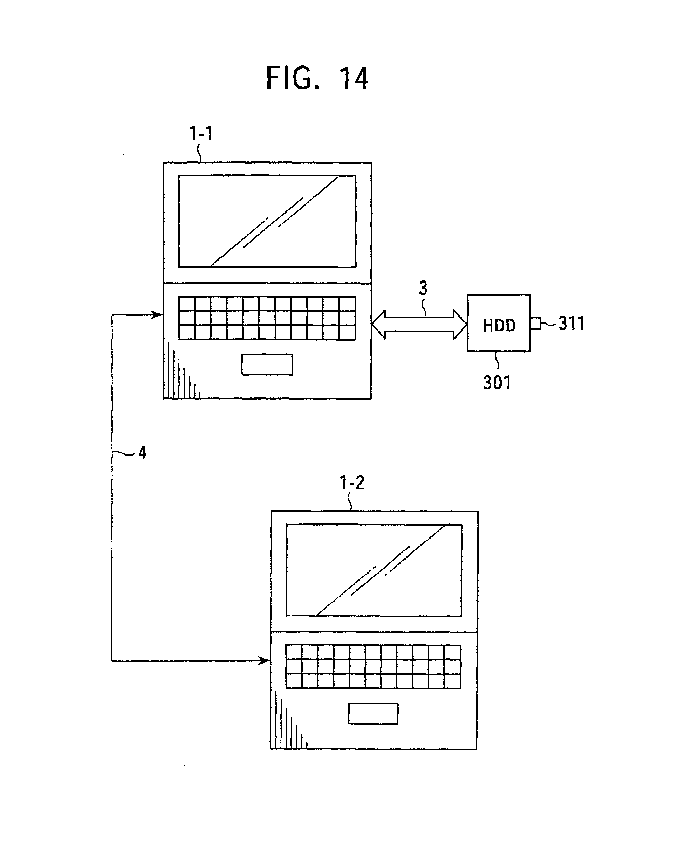

Fig. 14 is an example of the configuration according to a second embodiment of a network system using the present invention.

This system includes an HDD 301 instead of the HDD 11 shown in Fig. 2. The other parts are the same as in Fig. 2, and thus the corresponding description will be omitted.

The HDD 301 includes a switch 311, which is set to a storage mode or a general mode by user's operation.

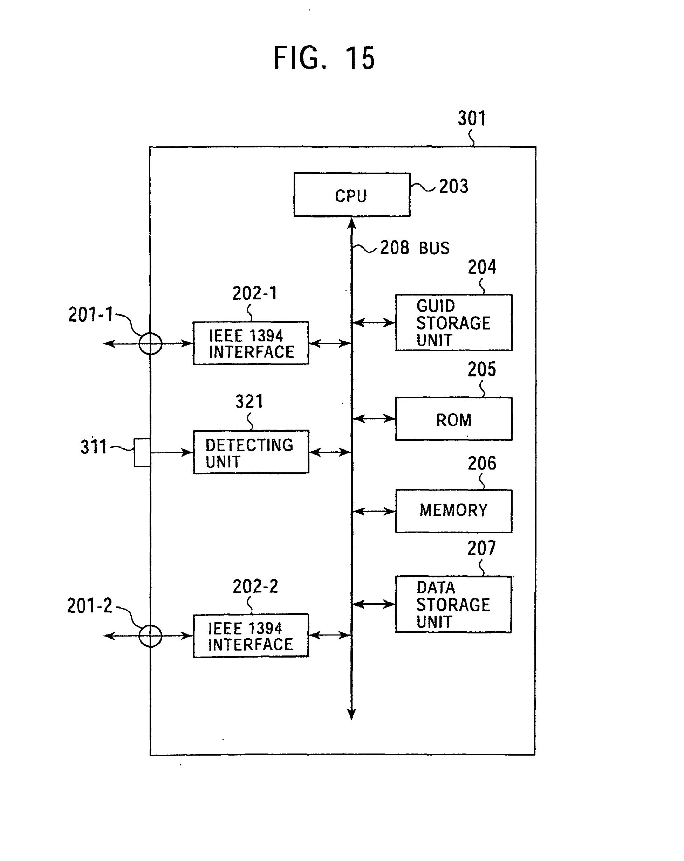

Fig. 15 shows an example of the configuration of the HDD 301. The HDD 301 further includes a detecting unit 321 in addition to the elements of the HDD 11 shown in Fig. 8.

The detecting unit 321 detects that the switch 311 is set to the storage mode or the general mode and notifies the detection result to the CPU 203.

In this case, a predetermined GUID is stored in the GUID storage unit 204 in a process described later. Thus, GUID is not stored when the HDD 301 is shipped. Also, the GUID storage unit 204 stores a predetermined password.

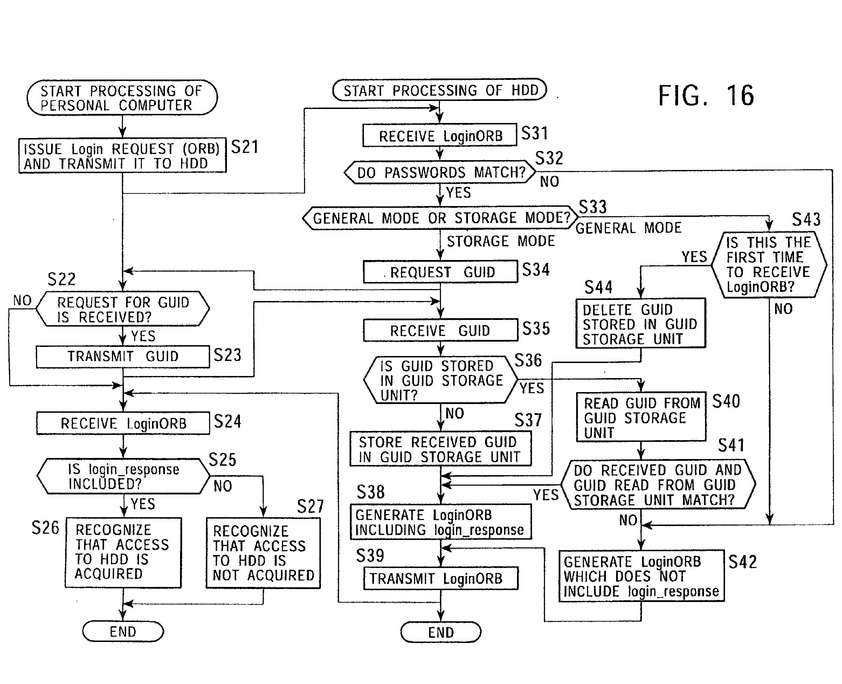

Next, the operation of the network system shown in Fig. 14 will be described with reference to the flowchart in Fig. 16. First, a case where the HDD 301 is requested access for the first time is described. Herein, the personal computer 1-1 requests access. The switch 311 of the HDD 301 is set to the storage mode.

In step S21, the personal computer 1-1 starts the IEEE 1394 I/F program 70A, issues LoginORB (Fig. 11) including a password, and outputs the LoginORB to the HDD 301 via the IEEE 1394 connector 3. The password included in the LoginORB is set, for example, by a user in advance.

Next, in step S31, the CPU 203 of the HDD 301 receives the Login request (LoginORB) input by the personal computer 1-1 via the IEEE 1394 connector 3 and the IEEE 1394 interface 202-1, and allows the memory 206 to store the LoginORB.

In step S32, the CPU 203 determines whether or not the password included in the received LoginORB and the password stored in the GUID storage unit 204 match. When it is determined that the passwords match, the process proceeds to step S33.

In step S33, the CPU 203 determines that the switch 311 is set to the storage mode or the general mode via the detecting unit 321. When the switch 311 is set to the storage mode, the process proceeds to step S34. In this case, the switch mode is set to the storage mode, and thus the process proceeds to step S34.

In step S34, the CPU 203 requests a GUID from the personal computer 1-1 via the IEEE 1394 interface 202-1 and the IEEE 1394 connector 3.

The CPU 72 of the personal computer 1-1 determines whether or not the GUID is requested from the HDD 301 in step S22. When it is determined that the GUID is requested, the process proceeds to step S23.

In step S23, the CPU 72 reads the GUID of the personal computer 1-1 stored in the ROM 70 and transmits the GUID to the HDD 301 via the IEEE 1394 connector 3.

The CPU 203 of the HDD 301 receives the GUID of the personal computer 1-1 via the IEEE 1394 interface 202-1 in step S35.

Next, in step S36, the CPU 203 determines whether or not a GUID is stored in the GUID storage unit 204. If it is determined that a GUID is not stored, the process proceeds to step S37. In this case, a GUID is not stored in the GUID storage unit 204, and thus the process proceeds to step S37.

In step S37, the CPU 203 allows the GUID storage unit 204 to store the GUID received in step S35.

Next, in step S38, the CPU 203 reads the LoginORB stored in the memory 206 in step S31, writes "login_response" and "status_FIFO" including data indicating granting of access in the LoginORB so as to generate a LoginORB to be returned to the personal computer 101. Then, in step S39, the CPU 203 outputs the LoginORB to the personal computer 1-1 via the IEEE 1394 interface 202-1 and the IEEE 1394 connector 3.

Accordingly, in step S24, the CPU 72 of the personal computer 1-1 receives the LoginORB input by the HDD 301 via the IEEE 1394 connector 3. Then, in step S25, the CPU 72 determines whether or not the received LoginORB includes login_response.

In this case, the received LoginORB includes the login_response, and thus the process proceeds to step S26, where the CPU 72 recognizes that it has acquired access to the HDD 301.

In step S32, if it is determined that the passwords do not match, the process proceeds to step S42, where the CPU 203 of the HDD 301 generates a LoginORB which does not include login_response. Then, in step S39, the CPU 203 transmits the LoginORB to the personal computer 1-1. That is, the personal computer 1-1 cannot acquire access to the HDD 301. At this time, in the personal computer 1-1, the process of step S23 is skipped.

Next, as described above, processes performed when the personal computer 1-1 accesses the HDD 301 again after the personal computer 1-1 has acquired access to the HDD 301 will be described with reference to the flowchart in Fig. 16. The switch 311 is set to the storage mode also in this example.

Herein, the same processes as in the above are performed in steps S21 to S26, steps S31 to S35, and steps S38, S39, and S42, and thus the corresponding description will be omitted.

In step S36, the CPU 203 of the HDD 301 determines that the GUID (GUID of the personal computer 1-1) is stored in the GUID storage unit 204, and reads the GUID in step S40.

Next, in step S41, the CPU 203 determines whether or not the GUID received in step S35 and the GUID read from the GUID storage unit 204 in step S40 match. When it is determined that the GUIDs match, the process proceeds to step S38. In this case, the GUID of the personal computer 1-1 is received in step S35 and the GUID of the personal computer 1-1 is read from the GUID storage unit 204 in step S40. Therefore, the process proceeds to step S38.

That is, in this case, the HDD 301 generates a LoginORB including login_response and the LoginORB is transmitted to the personal computer 1-1. Thus, the personal computer 1-1 can acquire access to the HDD 301 again.

Next, processes performed when the personal computer 1-2 requests access from the HDD 301 will be described with reference to the flowchart shown in FIG. 16. Herein, the personal computer 1-1 has already acquired access to the HDD 301 by the above-described processes. The switch 311 is set to the storage mode.

In step S21, the personal computer 1-2 starts the IEEE 1394 I/F program, issues a LoginORB including a password, and outputs the LoginORB to the HDD 301 via the IEEE 1394 cable 4 and the IEEE 1394 connector 3. The password included in the LoginORB is set by a user in advance.

Next, in step S31, the HDD 301 receives the Login request (LoginORB) input via the IEEE 1394 connector 3 and the IEEE 1394 interface 202-1, and allows the memory 206 to store the LoginORB.

In step S32, the HDD 301 determines whether or not the password included in the received LoginORB and the password stored in the memory 206 match. If it is determined that the passwords match, the process proceeds to step S33.

In step S33, the HDD 301 determines that the switch 311 is set to the storage mode. Then, in step S34, the HDD 301 requests a GUID from the personal computer 1-2 via the IEEE 1394 interface 202-1 and the IEEE 1394 connector 3.

In step S22, the personal computer 1-2 determines whether or not the GUID is requested by the HDD 301, and when it is determined that the GUID is requested, the process proceeds to step S23.

In step S23, the personal computer 1-2 reads the stored GUID of the personal computer 1-2 and transmits the GUID to the HDD 301 via the IEEE 1394 cable 4 and the IEEE 1394 connector 3.

In step S35, the HDD 301 receives the GUID of the personal computer 1-2 via the IEEE 1394 interface 202-1 and allows the memory 206 to store the GUID.

Next, in step S36, the HDD 301 determines that the GUID (GUID of the personal computer 1-1) is stored in the GUID storage unit 204, and reads the GUID in step S40.

Then, in step S41, the HDD 301 determines that the GUID received in step S35 (GUID of the personal computer 1-2) and the GUID read from the GUID storage unit 204 in step S40 (GUID of the personal computer 1-1) do not match, and the process proceeds to step S42.

That is, the HDD 301 generates a LoginORB which does not include login_response and the LoginORB is transmitted to the personal computer 1-2. Therefore, access to the HDD 301 is not granted to the personal computer 1-2.

Next, the operation of the network system shown in Fig. 14 in case where the switch 311 is set to the general mode will be described with reference to the flowchart shown in Fig. 16.

In step S21, the personal computer 1 (personal computer 1-1 or 1-2) starts the IEEE 1394 I/F program, issues a LoginORB including a password, and outputs the LoginORB to the HDD 301.

Then, in step S31, the HDD 301 receives a Login request (LoginORB) output from the personal computer 1 and allows the memory 206 to store the LoginORB.

In step S32, the HDD 301 determines whether or not the password included in the received LoginORB and the password stored in the GUID storage unit 204 match. If it is determined that the passwords match, the process proceeds to step S33.

In step S33, the HDD 301 determines that the switch 311 is set to the general mode and the process proceeds to step S43.

In step S43, the HDD 301 determines whether or not it is the first time to receive the LoginORB. If the HDD 301 determines that it is the first time to receive the LoginORB, the process proceeds to step S44.

In step S44, if a GUID is stored in the GUID storage unit 204, the HDD 301 deletes the GUID, and the process proceeds to step S38. That is, in this case, a LoginORB including login_response is generated and is transmitted to the personal computer 1. Thus, access to the HDD 301 is granted to the personal computer 1.

On the other hand, in step S43, if it is determined that it is not the first time to receive the LoginORB, that is, if access has already been requested, the process proceeds to step S42. That is, in this case, a LoginORB which does not include login_response is generated and the LoginORB is transmitted to the personal computer 1. Thus, access to the HDD 301 is not granted to the personal computer 1.

The series of processes described above can be executed by hardware and also by software. When the series of processes are executed by software, the program constituting the software is installed from a program storing medium to a computer incorporated into a dedicated hardware or a general-purpose personal computer in which various functions can be performed by installing various programs.

The program storing medium includes package media, which are separated from the personal computer and which are distributed to users for providing users with the program, such as the magnetic disk 121 (including a floppy disk), the optical disk 122 (including compact disk read-only memory (CD-ROM) and digital versatile disk (DVD)), the magnetooptical disk 123 (including a mini-disk (MD)), and the semiconductor memory 124 (including memory stick) to which the program is recorded.

In this description, the steps forming the program recorded in the program storing medium, that is, the processes performed in time-series according to the described order, may be performed in parallel or independently.

Also, in this description, the system refers to the whole apparatus including a plurality of devices.

### Industrial Applicability

According to the present invention, control can be adequately allowed to a control device which requests control.

## Claims

1. An information processing apparatus connected to a bus via one of a plurality of control devices, which are connected to the bus, the apparatus comprising:
storage means for storing authentication information of the control device for which control is allowed;
obtaining means for obtaining the authentication information of the control device which requests control via the bus;
comparing means for comparing the authentication information stored in the storage means and the authentication information obtained by the obtaining means; and
allowing means for allowing the control device which requests control to perform control based on the comparison result obtained from the comparing means.

2. The information processing apparatus according to Claim 1, wherein the storage means stores the authentication information of one of the control devices in advance.

3. The information processing apparatus according to Claim 1, wherein, when the storage means does not store authentication information, the storage means stores the authentication information of the control device that first requests control from among the plurality of control devices.

4. The information processing apparatus according to Claim 1, further comprising:
setting means for setting a mode, wherein, when a first mode is set by the setting means and when the storage means does not store authentication information, the storage means stores the authentication information of the control device that first requests control from among the plurality of control devices.

5. The information processing apparatus according to Claim 4, wherein, when a second mode is set by the setting means and when control is requested for the first time; the allowing means deletes the authentication information stored in the storage means and allows the control device which requests control to perform control.

6. An information processing method in an information processing apparatus connected to a bus via one of a plurality of control devices, which are connected to the bus, the method comprising:
a storing step for storing authentication information of the control device for which control is allowed;
an obtaining step for obtaining the authentication information of the control device which requests control via the bus;
a comparing step for comparing the authentication information stored in the storing step and the authentication information obtained in the obtaining step; and
an allowing step for allowing the control device which requests control to perform control based on the comparison result obtained in the comparing step.

7. A recording medium to which a computer-readable program is recorded, the program being for an information processing apparatus connected to a bus via one of a plurality of control devices, which are connected to the bus, the program comprising:
a storing step for storing authentication information of the control device for which control is allowed;
an obtaining step for obtaining the authentication information of the control device which requests control via the bus;
a comparing step for comparing the authentication information stored in the storing step and the authentication information obtained in the obtaining step; and
an allowing step for allowing the control device which requests control to perform control based on the comparison result obtained in the comparing step.

8. A program for an information processing apparatus connected to a bus via one of a plurality of control devices, which are connected to the bus, the program allowing a computer to execute processes comprising:
a storing step for storing authentication information of the control device for which control is allowed;
an obtaining step for obtaining the authentication information of the control device which requests control via the bus;
a comparing step for comparing the authentication information stored in the storing step and the authentication information obtained in the obtaining step; and
an allowing step for allowing the control device which requests control to perform control based on the comparison result obtained in the comparing step.

## Amended claims

### Amended claims under Art. 19.1 PCT

**1.** (Amended) An information processing apparatus to which a plurality of control devices may be connected via a predetermined bus, the apparatus comprising:
storage means for registering and storing unique authentication information which is allocated to one of the plurality of control devices when the control device is manufactured;
command receiving means for receiving a command for requesting access transmitted from a control device;
requesting means for requesting the authentication information from the control device which has sent the command;
authentication information receiving means for receiving the authentication information transmitted in response to the request;
authentication information comparing means for comparing the authentication information received by the authentication information receiving means and the authentication information stored in the storage means;
writing means for writing data indicating granting of access in a part of the command when the authentication information received by the authentication information receiving means and the authentication information stored in the storage means correspond; and
returning means for returning the command in which the data indicating granting of access is written.

**2.** The information processing apparatus according to Claim 1, wherein the storage means stores the authentication information of one of the control devices in advance.

**3.** (Amended) The information processing apparatus according to Claim 1, wherein, when the storage means does not store authentication information, the storage means stores the authentication information of the control device that first requests access.

**4.** (Amended) The information processing apparatus according to Claim 1, further comprising mode setting means for setting:
a first mode in which the requesting means for requesting the authentication information from the control device which has transmitted the command is performed; and
a second mode in which the returning means for returning the command to the control device which first requested the command is performed without requesting the authentication information from the control device which has transmitted the command.

**5.** (Deleted)

**6.** (Amended) An information processing method in an information processing apparatus to which a plurality of control devices may be connected via a predetermined bus, the method comprising:
a storing process for registering and storing unique authentication information which is allocated to one of the plurality of control devices when the control device is manufactured;
a command receiving process for receiving a command for requesting access transmitted from a control device;
a requesting process for requesting the authentication information from the control device which has sent the command;
an authentication information receiving process for receiving the authentication information transmitted in response to the request;
an authentication information comparing process for comparing the authentication information received in the authentication information receiving process and the authentication information stored in the storing process;
a writing process for writing data indicating granting of access in a part of the command when the authentication information received in the authentication information receiving process and the authentication information stored in the storing process correspond; and
a returning process for returning the command in which the data indicating granting of access is written.

**7.** (Amended) A storage medium storing a program for an information processing apparatus to which a plurality of control devices may be connected via a predetermined bus, the program comprising:
a storing process for registering and storing unique authentication information which is allocated to one of the plurality of control devices when the control device is manufactured;
a command receiving process for receiving a command for requesting access transmitted from a control device;
a requesting process for requesting the authentication information from the control device which has sent the command;
an authentication information receiving process for receiving the authentication information transmitted in response to the request;
an authentication information comparing process for comparing the authentication information received in the authentication information receiving process and the authentication information stored in the storing process;
a writing process for writing data indicating granting of access in a part of the command when the authentication information received in the authentication information receiving process and the authentication information stored in the storing process correspond; and
a returning process for returning the command in which the data indicating granting of access is written.

**8.** (Amended) A program for an information processing apparatus to which a plurality of control devices may be connected via a predetermined bus, the program allowing the information processing apparatus to execute processes comprising:
a storing process for registering and storing unique authentication information which is allocated to one of the plurality of control devices when the control device is manufactured;
a command receiving process for receiving a command for requesting access transmitted from a control device;
a requesting process for requesting the authentication information from the control device which has sent the command;
an authentication information receiving process for receiving the authentication information transmitted in response to the request;
an authentication information comparing process for comparing the authentication information received in the . authentication information receiving process and the authentication information stored in the storing process;
a writing process for writing data indicating granting of access in a part of the command when the authentication information received in the authentication information receiving process and the authentication information stored in the storing process correspond; and
a returning process for returning the command in which the data indicating granting of access is written.

**9.** (Added) The information processing apparatus according to Claim 1, further comprising:
password storage means for storing a password; and
password comparing means for comparing a password included in the received command and the password stored in the password storage means, wherein the requesting means requests the authentication information from the control device which has transmitted the command when the password included in the received command and the password stored in the password storage means correspond.

**10.** (Added) The information processing apparatus according to Claim 1, wherein the command is Login Operation Request Block.

**11.** (Added) The information processing apparatus according to Claim 1, wherein the authentication information is Global Unique ID.

**12.** (Added) The information processing apparatus according to Claim 1, wherein the bus includes an IEEE 1394 bus.

**13.** (Added) The information processing apparatus according to Claim 1, wherein communication is performed by using a Serial Bus Protocol 2.
